Europäisches Patentamt

(19) European Patent Office

Office européen des brevets

(11) Publication number: **0 090 047**
**B1**

(12) # EUROPEAN PATENT SPECIFICATION

(45) Date of publication of patent specification: **16.12.87**

(51) Int. Cl.⁴: **G 11 B 5/09, H 04 L 25/49**

(21) Application number: **81902606.3**

(22) Date of filing: **25.09.81**

(86) International application number:
**PCT/JP81/00253**

(87) International publication number:
**WO 83/01141 31.03.83 Gazette 83/08**

(54) **ENCODING AND DECODING SYSTEM FOR BINARY DATA.**

(43) Date of publication of application:
**05.10.83 Bulletin 83/40**

(45) Publication of the grant of the patent:
**16.12.87 Bulletin 87/51**

(84) Designated Contracting States:
**DE FR GB**

(56) References cited:
**EP-A-0 063 912**
**FR-A-2 269 823**
**US-A-3 564 557**
**US-A-3 689 899**
**US-A-3 996 613**
**US-A-4 032 979**
**US-A-4 146 909**
**US-A-4 150 404**

**N.E.C. RESEARCH & DEVELOPMENT, no. 44,**
**January 1977, pages 34-40, Tokyo JP; TOSHIO**
**HORIGUCHI et al.: "A modulation code**
**construction method in digital recording"**

(73) Proprietor: **MITSUBISHI DENKI KABUSHIKI**
**KAISHA**
**2-3, Marunouchi 2-chome Chiyoda-ku**
**Tokyo 100 (JP)**

(72) Inventor: **FURUKAWA, Teruo Mitsubishi Denki**
**K. K.**
**Oyokiki Kenkyusho 80 Azanakano**
**Minamishimizu**
**Amagasaki-shi Hyogo 661 (JP)**

(74) Representative: **Lawson, David Glynne et al**
**MARKS & CLERK 57-60 Lincoln's Inn Fields**
**London WC2A 3LS (GB)**

(56) References cited:

**IEEE Transactions on Magnetics, Vol.12, No.6**
**(1976-11) T.HORIGUCHI et al.: "An**
**Optimization of Modulation Codes in Digital**
**Recording" p.740-742**

Courier Press, Leamington Spa, England.

# 0 090 047

**Description**

Technical field

This invention relates to a binary code encoding method for converting a sequence of binary data to a sequence of binary codes suitable for the recording upon recording the original binary data on a record medium such as a magnetic tape or a magnetic disc, and a decoding method for decoding and converting the sequence of converted binary codes upon reproducing it from the record medium. Furthermore it refers to apparatus for encoding and decoding.

Background art

In order to increase a recording density upon recording binary data on a record medium such as a magnetic tape or a magnetic disc, there are previously proposed and practiced various encoding systems.

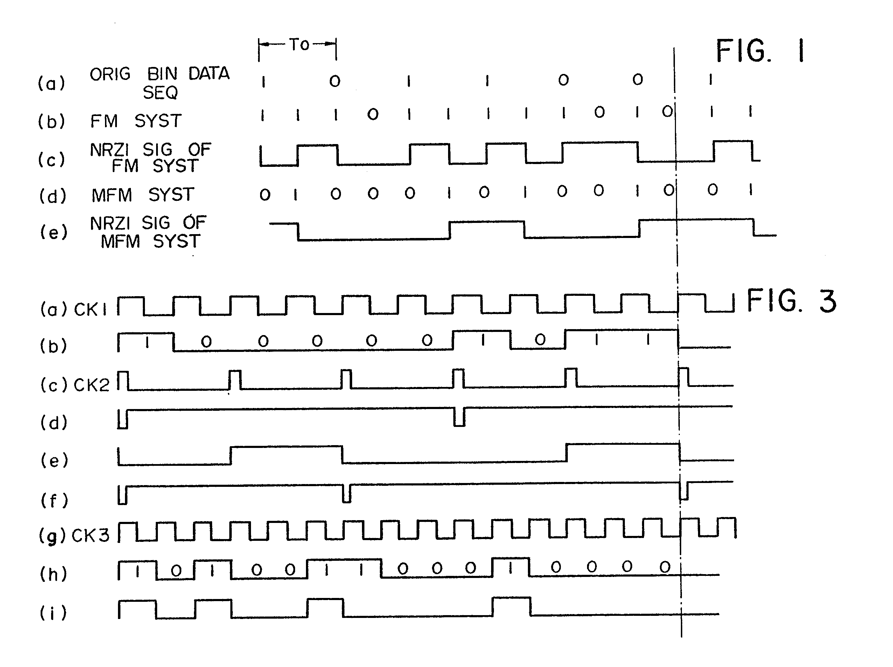

Fig. 1 is an explanatory diagram of one example of conventional encoding systems and Fig. 1(a) shows one example of a bit pattern of an original binary data sequence wherein numerals 0 and 1 express logic "0" and "1" respectively and $T_0$ indicates a bit interval. The same Figs. (b) and (d) are one example of conventional encoding systems, the same Fig. (b) is called an FM system and the same Fig. (d) is called an MFM system (a modified FM system). A conversion algorithm of the FM system is to convert bits "1" and "0" in an original binary data sequence to "11" and "10" respectively. Also a conversion algorithm of the MFM system is to convert bits "1" and "0" in an original binary data sequence to "01" and "X0" respectively where "X" becomes a complement logic (1→0 or 0→1) of a code bit just preceding thereto.

Further a sequence of codes converted according to each of the encoding systems is such that recording currents are generated and recorded on a record medium so as to cause an inversion of magnetization with bits of "1" but not to cause an inversion of magnetization with bits of "0". Figs. 1(c) and (e) are waveforms of the recording currents (NRZI signals) for the code sequences encoded according to the FM system of the same Fig. (b) and the MFM system of the same Fig. (d) respectively.

In the case the recording is generally effected on a record medium,

(a) if a spacing between the inversions of magnetization (a recording wavelength) is shortened then magnetic transitions due to the front and rear inversions of magnetization interfere with each other to result in a cause for generating errors upon decoding a reproduced signal;

(b) even if a demodulation phase margin $(T_w)$ (which will be described later) during the reproduction is small with respect to the spacing between the inversions of magnetization, the abovementioned errors are apt be caused; and

(c) if the spacing between the inversions of magnetization is long as compared with a period of a demodulating clock signal produced from a reproduced signal then the demodulating clock signal can not be accurately produced from the reproduced signal and the abovementioned errors are apt to be caused;

In general encoding systems, therefore, the undermentioned variables are given as the parameters indicating the ability including the three items (a), (b) and (c) as described above. Now assuming that in some encoding system a sequence of m-bit binary data is converted to a sequence of n-bit binary codes $(n \geq m)$ and between a code bit "1" selected at will from the code sequence after the conversion and a code bit "1" next developed, there exist code bits "0" whose number has a minimum of d and a maximum of k, the following expressions (1) to (4) hold:

$$T_{min} \quad \text{minimum spacing between inversions of magnetization} \quad = \frac{m}{n}(d+1)T_0 \quad (1)$$

$$T_{max} \quad \text{maximum spacing between inversions of magnetization} \quad = \frac{m}{n}(k+1)T_0 \quad (2)$$

$$C_{LK} \quad \text{period of demodulating clock signal} \quad = \frac{m}{n}T_0 \quad (3)$$

$$T_w \quad \text{demodulation phase margin} \quad = \frac{m}{n}T_0 \quad (4)$$

where $T_0$ is a period of original data.

Accordingly, from the foregoing description it is seen that values of the expressions (1) and (4) are preferably larger (the abovementioned items (a) and (b)) and also the ratio of the maximum spacing $T_{max}$ between the inversions of magnetization to the period $C_{LK}$ of the demodulating clock signal (expression (5)) is preferably smaller (the abovementioned item (c)).

2

$$\frac{T_{max}}{C_{LK}} = \frac{m}{n} \quad (k+1)T_0 / \frac{m}{n}T_0 = k+1 \qquad (5)$$

NEC Research and Development No. 44(1977-01) pages 34 to 40 discloses a method of constructing run-length-limited codes of the type (d, k; m, n; r), where d is the minimum number of "0" code bits, k is the maximum number of "0" code bits, and j.m data bits are mapped into j.n code bits letter j; varying between I and r.

Such a code has the following relevant properties:

Minimum transmission interval

$$T_{min}=\frac{m}{n}(d+1)T_0; \qquad M=\frac{m}{n}(d+1) \text{ (should be high)}$$

Code rate

$$T_W=\frac{m}{n}T_0; \qquad R=\frac{m}{n} \text{ (should be high)}$$

Ratio

$$T_{max}/T_{min}=(k+1)/(d+1)=P \text{ (should be low)}.$$

The present invention, in one aspect, provides a binary data encoding method in which a binary data sequence is divided into predetermined blocks; when a data block having a first length of m bits is one of a predetermined set of types of data block, it is converted to a predetermined first code block of the length n which is greater than m; when the data block of the first length is not one of the said set, that data block together with the next two data bits following that data block is converted to a predetermined code block 3 bit longer than the first code block; and from not less than one to not more than seven code bits "0" are caused to be present between any two successive code bits "1" in the converted code sequence;

characterised in that the data block length m is four bits, each four bit block of said set is converted to a code block of the length n=6, each block of six bits consisting of a 4-bit block not belonging to said set together with the two next bits being converted to a 9-bit code block, whose sixth to eighth bits are "0".

Relative to the NEC system, the present invention uses longer data blocks, with zeros at the sixth to eighth code bits in the 9-bit codes. These bits are used to sense the 9-bit code patterns during decoding.

With respect to the FM system, the MFM system, the NEC system and the encoding system according to the present invention, the foregoing parameters are shown in the following first Table:

1st TABLE
Table of comparison of parameters in respective encoding systems

| Coding system \ Parameter | $T_{min}$ | $T_W$ | $T_{max}/C_{LK}$ | $T_{max}/T_{min}$ |
|---|---|---|---|---|
| FM System | $0.5T_0$ | $0.5T_0$ | 4 | 2 |
| MFM System | $T_0$ | $0.5T_0$ | 4 | 4 |
| NEC | $\frac{4}{3}T_0$ | $\frac{2}{3}T_0$ | 8 | 4 |
| System of this invention | $1.33T_0(=\frac{4}{3}T_0)$ | $0.66T_0(=\frac{2}{3}T_0)$ | 8 | 4 |

The present encoding method provides excellent properties in respect of minimum spacing between inversions of magnetisation, and demodulating phase margine, compared with the conventional FM and MFM systems, and involves reduced occurrence of errors during demodulation.

A method for decoding such a code sequence is contained in claim 4.

In a preferred embodiment of the invention, thirteen conversion codes are provided for twelve original data patterns so that two types of conversion codes correspond to signal original data.

The present invention also provides binary data coding apparatus for coding according to the present method, which comprises a shift register for receiving the binary data sequence and provided with parallel outputs; a pattern check circuit receiving data from later shift register outputs for deciding whether the data preceding by four bits the data block about to be converted corresponds to the said set or not; a conversion decision circuit controlled by the pattern check circuit for providing a decision signal at a first value when the said data correspond to the said set and at a second value when the data do not correspond to the said set; a code memory that receives data from the shift register and provides outputs comprising 6-bit codes of 4-bit data blocks or 9-bit codes whose sixth to eighth bits are "0" in response to 6-bit data blocks according whether the decision signal is at its first or second value respectively; and an output shift register for providing the coded outputs of the memory in serial form.

The present invention also provides binary data decoding apparatus, for decoding the data a encoded according to the present method, which comprises an input shift register; a code memory connected to parallel outputs of the shift register for decoding 6-bit codes to 4-bit data blocks and for decoding 9-bit codes to 6-bit data blocks; a conversion sensor which receives outputs from the shift register which detect a pattern 000, in the sixth to eighth bit position and which provides output signals indicating whether the coded data re 6-bit or 9-bit; and an output shift register receiving decoded outputs from the memory and controlled by the conversion sensor for providing serial data output.

The present invention will be further described with reference to the accompanying drawings, in which:

Figure 1 is an explanatory diagram of conventional encoding systems of the FM and MFM systems;

Figure 2 is a block diagram of one embodiment to which the encoding system of the present invention is applied;

Figure 3 is a timing chart for explaining the operation of the embodiment shown in Figure 2;

Figure 4 is a block diagram of one embodiment to which the decoding system of the present invention is applied; and

Figure 5 is a timing chart for explaining the operation of the embodiment shown in Fig. 3.

The present invention will be described in detail hereinafter in conjunction with the embodiments shown in the accompanying drawings. The undermentioned second Table is one concrete example of a conversion algorithm of the present encoding system.

## 2nd TABLE
### Table of conversion algorithm of novel encoding system

#### Conversion Table S1

|    | Original data |       | Converted code |
|----|---------------|-------|----------------|
|    | 1100          | ←→    | X00000         |
|    | 1101          | ←→    | X00001         |
|    | 1110          | ←→    | X00101         |
|    | 1111          | ←→    | 010101         |
|    | 1000          | ←→    | X01001         |
|    | 1001          | ←→    | 010001         |
| S1 | 1010          | ←→    | X00010         |
|    | 1011          | ←→    | X01010         |
|    | 0100          | ←→    | 010010         |
|    | 0101          | ←→    | X00100         |
|    | 0110          | ←→    | 010100         |
|    | 0111          | ←→    | X01000         |
|    | 0000          | ←→    | 010000         |

#### Conversion Table S2

|    | Original data |       | Converted code |
|----|---------------|-------|----------------|
|    | 000100        | ←→    | X00010001      |
|    | 000101        | ←→    | X00100001      |
|    | 000110        | ←→    | X01000001      |
|    | 000111        | ←→    | X01010001      |
|    | 001000        | ←→    | 010000001      |
|    | 001001        | ←→    | 010010001      |
| S2 | 001010        | ←→    | 010100001      |
|    | 001011        | ←→    | X00010000      |
|    | 001100        | ←→    | X01010000      |
|    | 001101        | ←→    | 010010000      |
|    | 001110        | ←→    | X00100000      |
|    | 001111        | ←→    | 010100000      |
|    |               |       | X01000000      |

Here X is a complement logic (0X→01 and 1X→10) immediately before a code bit X in a converted code sequence.

**0 090 047**

The conversion algorithm is to divide first original data at intervals of four bits and convert those divided 4-bit data to 6-bit codes in accordance with the algorithm of the conversion table S1 of the second Table when patterns of said 4-bit data correspond to any of thirteen types of patterns shown in the conversion table S1. However when the patterns of the 4-bit data correspond to none of the thirteen types of patterns in the conversion table S1, the division is effected at intervals of six bits including 2-bit data following said 4-bit data and those divided 6-bit data are converted to 9-bit data in accordance with the conversion algorithm shown in the conversion table S2 of the second Table. Here a code bit X in a converted code sequence is a complement logic immediately before the same.

| X | Bit Immy Befe Code Bit X |
|---|---|
| 1 | 0 |
| 0 | 1 |

By observing the code sequences converted in accordance with the foregoing conversion algorithms, the parameters hold m/n−4/6 (or 6/9) and d=1 and k=7 are satisfied.

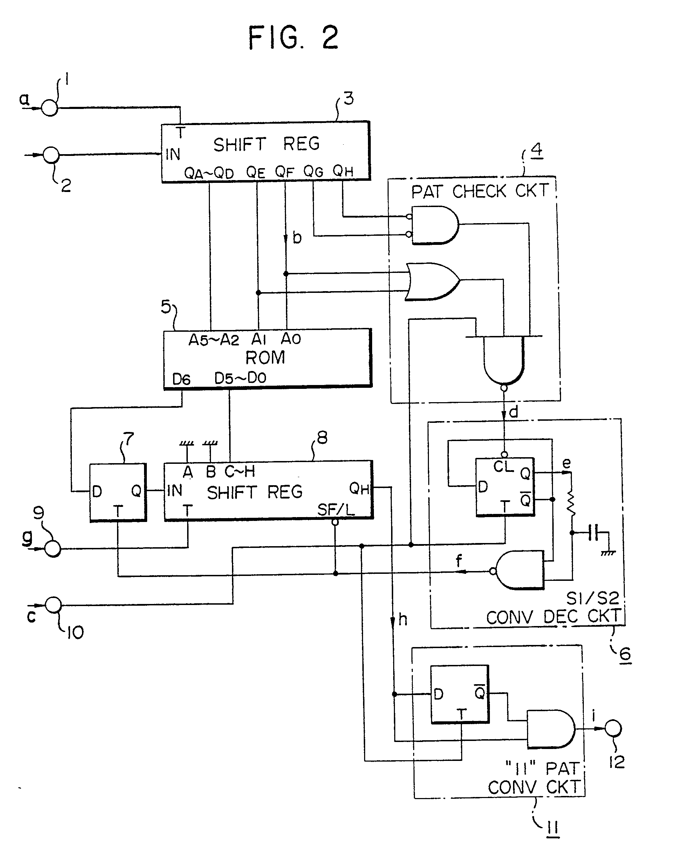

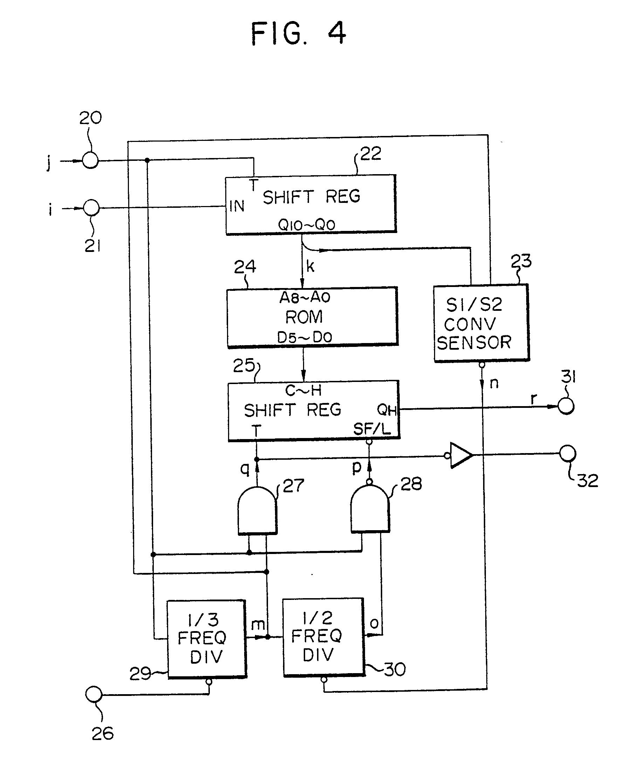

Fig. 2 is a block diagram of one embodiment to which an encoding system according to the present invention is applied and Fig. 3 is a timing chart for explaining the operation thereof. In Fig. 2 original data are entered into an input terminal (IN) to a shift register (serial in-parallel out) (3) through an input terminal (2). Also the shift register (3) has entered into a terminal (T) thereof a clock signal a (CK1) (Fig. 3(a)) synchronized with a clock signal for the original data. The original entered data are delayed one bit at a time in the shift register (3) with the clock signal CK1 applied to the terminal (T) and delivered through data output terminals ($Q_A$ to $Q_H$). Fig. 3(b) shows a signal b delivered through the data output terminal ($Q_F$). Also an input terminal (10) has entered thereinto a common clock signal c (CK2) (Fig. 3(c)) upon effecting the conversion S1 or S2 of the second Tables.

The common clock signal CK2 is a signal with a frequency equal to one half that of the clock signal for the original data. Further an input terminal (g) has entered thereinto a clock signal g (CK3) (Fig. 3(g)) synchronized with a converted code sequence (this will be described hereinafter). First the description will be made in conjunction with the process of subjecting the original entered data to the conversion S1 (or the conversion S2). Among outputs $Q_A$ to $Q_H$ from the shift register (3) the outputs $Q_E$ to $Q_H$ are entered into a pattern check circuit (4) where the pattern check is effected if a pattern preceding, by four bits, the data to be converted corresponds to any of the thirteen types of the patterns in the conversion table S1. If it corresponds to any of the thirteen types of the patterns in the conversion table S1 and if it is put in synchronization with the common clock signal CK2 then a checking signal d (Fig. 3(d)) is not delivered. On the contrary, if it does not correspond to any of the thirteen types of the patterns in the conversion table S1 and if it is put in synchronization with the common clock signal CK2 then the checking signal is delivered. The common clock signal CK2 is applied, in addition to the application to the pattern check circuit (4) from the input terminal (10) as described above, to an S1/S2 conversion decision circuit (6). That S1/S2 conversion decision circuit (6) halves the frequency of the common clock signal CK2 by a FLIP-FLOP disposed therein and accordingly produces a signal with a frequency equal to a quarter that of the clock signal CK1 but this frequency dividing FLIP-FLOP is cleared with the checking signal d from the pattern check circuit (4). By doing so, an output from the frequency dividing FLIP-FLOP, as shown in Fig. 3(e), results in a signal having a period CK1/4 with the conversion S1 effected but in a signal having a period CK1/6 with the conversion S2 effected and a falling signal f (Fig. 3(f)) of the output e from the frequency dividing FLIP-FLOP is delivered as an S1/S2 conversion decision signal. Then the outputs $Q_A$ to $Q_F$ from the shift register (3) are entered into input terminals ($A_5$ to $A_0$) to an ROM (a read only memory for example, SN74S471N of TI firm) (5) respectively and provided at its output terminals ($D_0$ to $D_6$) is an output pattern as unequivocally determined by input signals $A_0$ to $A_5$. Further it is assumed that the ROM has a conversion algorithm shown in the following third Table:

6

3rd TABLE
Algorithm of converting ROM of encoding system of this invention

| Input address | | | | | | Output pattern | | | | | | |
|---|---|---|---|---|---|---|---|---|---|---|---|---|
| $A_0$ | $A_1$ | $A_2$ | $A_3$ | $A_4$ | $A_5$ | $D_0$ | $D_1$ | $D_2$ | $D_3$ | $D_4$ | $D_5$ | $D_6$ |
| 1 | 1 | 0 | 0 | Y | Y | 1 | 0 | 0 | 0 | 0 | 0 | Z |
| 1 | 1 | 0 | 1 | Y | Y | 1 | 0 | 0 | 0 | 0 | 1 | Z |
| 1 | 1 | 1 | 0 | Y | Y | 1 | 0 | 0 | 1 | 0 | 1 | Z |
| 1 | 1 | 1 | 1 | Y | Y | 0 | 1 | 0 | 1 | 0 | 1 | Z |
| 1 | 0 | 0 | 0 | Y | Y | 1 | 0 | 1 | 0 | 0 | 1 | Z |
| 1 | 0 | 0 | 1 | Y | Y | 0 | 1 | 0 | 0 | 0 | 1 | Z |
| 1 | 0 | 1 | 0 | Y | Y | 1 | 0 | 0 | 0 | 1 | 0 | Z |
| 1 | 0 | 1 | 1 | Y | Y | 1 | 0 | 1 | 0 | 1 | 0 | Z |
| 0 | 1 | 0 | 0 | Y | Y | 0 | 1 | 0 | 0 | 1 | 0 | Z |
| 0 | 1 | 0 | 1 | Y | Y | 1 | 0 | 0 | 1 | 0 | 0 | Z |
| 0 | 1 | 1 | 0 | Y | Y | 0 | 1 | 0 | 1 | 0 | 0 | Z |
| 0 | 1 | 1 | 1 | Y | Y | 1 | 0 | 1 | 0 | 0 | 0 | Z |
| 0 | 0 | 0 | 0 | Y | Y | 0 | 1 | 0 | 0 | 0 | 0 | Z |
| 0 | 0 | 0 | 1 | 0 | 0 | 1 | 0 | 0 | 0 | 1 | 0 | 1 |
| 0 | 0 | 0 | 1 | 0 | 1 | 1 | 0 | 0 | 1 | 0 | 0 | 1 |
| 0 | 0 | 0 | 1 | 1 | 0 | 1 | 0 | 1 | 0 | 0 | 0 | 1 |
| 0 | 0 | 0 | 1 | 1 | 1 | 1 | 0 | 1 | 0 | 1 | 0 | 1 |
| 0 | 0 | 1 | 0 | 0 | 0 | 0 | 1 | 0 | 0 | 0 | 0 | 1 |
| 0 | 0 | 1 | 0 | 0 | 1 | 0 | 1 | 0 | 0 | 1 | 0 | 1 |
| 0 | 0 | 1 | 0 | 1 | 0 | 0 | 1 | 0 | 1 | 0 | 0 | 1 |
| 0 | 0 | 1 | 0 | 1 | 1 | 1 | 0 | 0 | 0 | 1 | 0 | 0 |
| 0 | 0 | 1 | 1 | 0 | 0 | 1 | 0 | 1 | 0 | 1 | 0 | 0 |
| 0 | 0 | 1 | 1 | 0 | 1 | 0 | 1 | 0 | 0 | 1 | 0 | 0 |
| 0 | 0 | 1 | 1 | 1 | 0 | 1 | 0 | 0 | 1 | 0 | 0 | 0 |
| 0 | 0 | 1 | 1 | 1 | 1 | 0 | 1 | 0 | 1 | 0 | 0 | 0 |

where YY: consists of combinations of four types of "11", "01", "10" and "00" and
Z: may be a logic of either "1" or "0"

Among the converted output pattern, outputs $D_5$ to $D_0$ are entered into presetting terminals (C to H) of a shift register (parallel in-serial out) (8). Also an output $D_6$ is latched for a period of the S1/S2 conversion decision signal f by a latching FLIP-FLOP (7) and entered into an input terminal (IN) to the shift register (8). By entering the S1/S2 conversion decision signal f into the shift register (8) at the input terminal (SF/L) for the shift load control, the abovementioned presetting signals are latched and codes of six converted bits (C to H) or nine converted bits (C to H, A to B and IN) are delivered, as a serial output signal h (Fig. 3(h)) through an output terminal ($Q_H$ by means of a clock signal CK3 applied to a terminal (T)).

From this operation it will be understood that the pattern (1000) of the original data shown in Fig. 3(b) is converted to a code pattern (101001) shown in Fig. 3(h) and that a data pattern (001011) following the abovementioned pattern (1000) is converted to a code pattern (100010000). At that time the ROM has a conversion algorithm including all X values in the conversion tables S1 and S2 converted to "1" logics. Thus the serial output signal h may have caused thereon two consecutive "1"s. In order to process this, the serial output signal h is converted to a normal signal i shown in Fig. 3(i) by a "11" pattern conversion circuit (11) for converting a "11" pattern to a "10" pattern after which it is delivered to an output terminal (12).

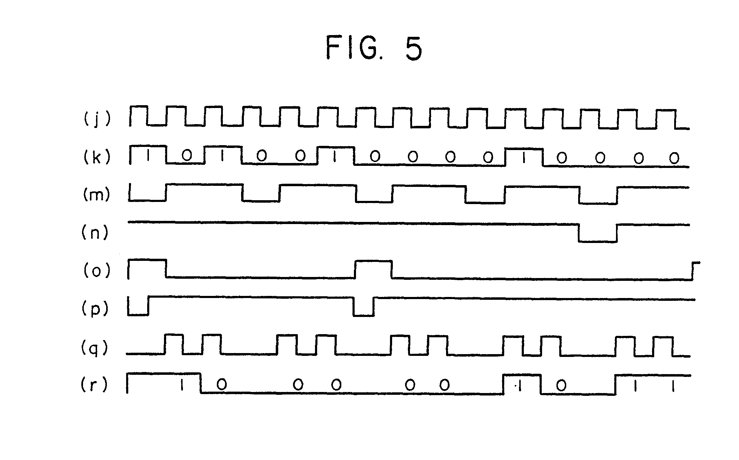

Subsequently Fig. 4 shows a block diagram of one embodiment to which the decoding system of the present invention is applied and Fig. 5 shows a timing chart for explaining the operation thereof. First, a converted code sequence i (Fig. 3(i)) is applied to an input terminal (21) and a clock signal j (Fig. 5(j)) synchronized with the same is applied to an input terminal (20). Then as during the encoding, the converted code sequence entered into a shift register (serial in-parallel out) (22) through its input terminal (IN) is delayed one bit at a time in the shift register (22) with the clock signal j applied to its terminal (T) and is delivered through output terminals ($Q_{10}$ to $Q_0$) of the shift register (22). (Assuming that $Q_0$ designates that output terminal through which a signal having the largest delay is delivered, the delay is small in the order of $Q_1, ..., Q_{10}$). It is now assumed that a signal k for a code sequence shown in Fig. 5(k) is being delivered to the output terminal $Q_2$. On the other hand, signals (nine lines) at the output terminals ($Q_2$ to $Q_{10}$) are entered into input terminals ($A_0$ to $A_8$) to an ROM (24) (SN74S472N of TI firm or the like), reversely converted within the ROM (24) by using a conversion algorithm reversed from that in the second table and entered, as decoded output signals on six lines, into presetting terminals (C to H) of a shift register (25) (parallel in-serial out) from output terminals ($D_0$ to $D_6$). On the other hand, the clock signal j is also applied to a 1/3 frequency divider (29). This 1/3 frequency divider (29) is put in synchronization with a synchronizing signal (not shown) entered into an input terminal (26) and generates a signal m (Fig. 5(m)) with a frequency equal to one third that of the signal j. This signal m with the trisected frequency results in a decoding timing signal. Then a 1/2 frequency divider (3) further frequency divides this frequency trisected signal m by two a to generate a signal o with one sixth the frequency (Fig. 5(o)).

Subsequently when three consecutive bits $Q_0$ to $Q_2$ are of a pattern "000" among output signals $Q_0$ to $Q_{10}$ from the shift register (22) during a synchronized time interval of the 1/3 frequency divider (29), an S1/S2 conversion sensor circuit (23) generates an output signal n (Fig. 5(n)) which sets the polarity of an output from the 1/2 frequency divider (30). Through this operation the output signal o from the 1/2 frequency divider (30) becomes a signal which has sensed the S1/S2 conversion. The latter signal is applied to an NAND gate (28) along with the clock signal j. An output signal p (Fig. 5(p)) from the NAND gate (28) is applied to a terminal (SF/L) of the shift register (25) to latch signals entered into presetting terminals (C to H) thereof. Decoded data r (Fig. 5(r)) are delivered to an output terminal (31) through an output terminal ($Q_H$) of the shift register (25) with the reading clock signal q (Fig. 5(q)) having a period equal to 2/3 time that of the clock signal j and applied to a terminal (T) of the shift register (25). It is possible to use, as the reading clock signal q, a clock signal put in synchronization with the clock signal j by a PLL or the like but the abovementioned reading clock signal q is here obtained by gating the clock signal j with the output signal m from the 1/3 frequency divider (29) in an AND gate (27). Further this clock signal q is also delivered to a clock output terminal (32) after it has been inverted by an inverter. By observing that status in the timing chart of Fig. 5, it will be understood that patterns (101001) and (000010000) of an entered converted code sequence (=i) are decoded to the decoded data r (1000) and (001011) respectively.

Also the conversion tables S1 and S2 for the encoding algorithms used for explaining the present invention are one concrete example of the present invention and other encoding algorithms may be used. More specifically, the specified thirteen types of 4-bit data pattern to be converted to 6-bit codes in the encoding system can first select any patterns among the sixteen types of patterns composed of four bits. Also it is apparent that the correspondence to the selected patterns with 6-bit codes may be of any combination.

Then there exist twelve types of 6-bit data patterns having the remaining unselected three types of 4-bit data pattern added with 2-bit data following the latter. Those twelve types of 6-bit data patterns are converted to 9-bit codes. Also there exist thirteen types of those 9-bit patterns meeting the two requirements that from not less than one to not greater than seven of code bits "0" be present between a code bit "1" selected at will from the code sequence after the original data have been converted and a code bit "1" next developed therein and that the sixth to eighth code bits be of "0"'s respectively in order to sense the presence of patterns of the 9-bit codes during the decoding. The twelve types of 6-bit data may be of any combinations of twelve types selected at will from the thirteen types of 9-bit codes.

Industrial applicability

As described above, the encoding and decoding systems of the present invention have the excellent ability as a high density magnetic recording system as compared with conventional other modulation systems as shown in the first Table and become much simplified in a hardware construction. Therefore its practical merit is very large.

# 0 090 047

**Claims**

1. A binary data encoding method in which a binary data sequence is divided into predetermined blocks; when a data block having a first length of m bits is one of a predetermined set of types of data block, it is converted to a predetermined first code block of the length n which is greater than m; when a data block of the first length is not one of the said set, that data block together with the next two data bits following that data block is converted to a predetermined code block 3 bit longer than the first code block; and from not less than one to not more than seven code bits "0" are caused to be present between any two successive code bits "1" in the converted code sequence; characterised in that the data block length m is four bits, each four bit block of said set is converted to a code block of the length n=6, each block of six bits consisting of a four-bit block not belonging to said set together with the two next bits being converted to a nine-bit code block, whose sixth to eighth bits are "0".

2. A coding method as claimed in claim 1 characterised in that the said predetermined set of data block consists of the four-bit blocks that begin with 01, 10 and 11 and the block 0000.

3. A binary data encoding method according to claim 1 or 2, characterised in that, upon converting the 4-bit data blocks to the 6-bit code blocks and also upon converting the 6-bit data blocks to the 9-bit code blocks, the conversion is unequivocally effected by using any combination of data and codes shown in the following conversion tables S1 and S2 respectively;

Conversion Table S1

| 4-Bit data (thirteen types) | 6-Bit codes (thirteen types) |
|---|---|
| 1100 | X00000 |
| 1101 | X00001 |
| 1110 | X00101 |
| 1111 | 010101 |
| 1000 | X01001 |
| 1001 | 010001 |
| 1010 | X00010 |
| 1011 | X01010 |
| 0100 | 010010 |
| 0101 | X00100 |
| 0110 | 010100 |
| 0111 | X01000 |
| 0000 | 010000 |

and

9

Conversion Table S2

| 6-Bit data (twelve types) | 9-Bit Codes (thirteen types) |
|---|---|
| 000100 | X00010001 |
| 000101 | X00100001 |
| 000110 | X01000001 |
| 000111 | X01010001 |
| 001000 | 010000001 |
| 001001 | 010010001 |
| 001010 | 010100001 |
| 001011 | X00010000 |
| 001100 | X01010000 |
| 001101 | 010010000 |
| 001110 | X00100000 |
| 001111 | 010100000 |
|  | X01000000 |

where "X" is the complement of a value of the code bit preceding the X bit.

4. A binary data decoding method for decoding a code sequence converted in accordance with the encoding method according to claim 1, 2 or 3 the code sequence being divided at intervals of six bits, and when a sixth code bit in each of the divided 6-bit codes is either "1" or "0" and when either of two code bits following the same is not "0", said 6-bit codes are converted to predetermined 4-bit data block, but when said sixth code bit is "0" and when either of said two code bits following the same is of "0", codes of nine bits in their entirely having one bit further added thereto are converted to predetermined 6-bit data blocks.

5. A binary data decoding method for an encoding system according to claim 3, characterised in that a conversion reversed from the conversion table S1 is used to convert the 6-bit codes to the predetermined 4-bit codes and a conversion reversed from the conversion table S2 is used to convert the 9-bit codes to the predetermined 6-bit codes.

6. Binary data coding apparatus for carrying out a method according to claim 1, 2 or 3, characterised in that it comprises a shift register (3) for receiving the binary data sequence and provided with parallel outputs; a pattern check circuit (4) receiving data from later shift register (3) outputs ($Q_E$—$Q_H$) for deciding whether the data preceding by four bits the data block about to be converted corresponds to the said set or not; a conversion decision circuit (6) controlled by the pattern check circuit (4) for providing a decision signal (f) at a first value when the said data correspond to the said set and at a second value when whe data do not correspond to the said set; a code memory (5) that receives data from the shift register (3) and provides outputs comprising 6-bit codes of 4-bit data blocks or 9-bit codes whose sixth to eighth bits are "0" in response to 6-bit data blocks according whether the decision signal (f) is at its first or second value respectively; and an output shift register for providing the coded outputs of the memory in serial form.

7. A binary data decoding apparatus for decoding data encoded according to the methods of claim 1, 2 or 3, characterised in that it comprises an input shift register (22); a code memory (24) connected to parallel outputs of the shift register for decoding 6-bit codes to 4-bit data blocks and for decoding 9-bit codes to 6-bit data blocks; a conversion sensor (23) which receives outputs from the shift register (22) which detect a pattern 000, in the sixth to eighth bit position and which provides output signals indicating whether the coded data are 6-bit or 9-bit; and an output shift register (25) receiving decoded outputs from the memory and controlled by the conversion sensor (23) for providing serial data output.

**Patentansprüche**

1. Verfahren zum Kodieren binärer Daten, bei dem eine binäre Datenfolge in vorgegebene Blocks unterteilt wird; wenn ein Datenblock mit einer ersten Länge von m Bits einer von einem vorgegebenen Satz von Typen von Datenblöcken ist, wird er in einen vorgegebenen ersten Kodeblock mit der Länge n

10

umgewandelt, die größer als m ist; wenn ein Datenblock der ersten Länge nicht einer des Satzes ist, so wird dieser Datenblock zusammen mit den nächsten beiden Datenbits, die dem Datenblock folgen, in einen vorgegebenen Kodeblock umgewandelt, der drei Bits länger ist als der erste Kodeblock; und es wird dafür gesorgt, daß nicht weniger als eines und nicht mehr als sieben Kodebits "0" zwischen jeweils zwei aufeinanderfolgenden Kodebits "1" in der umgewandelten Kodesequenz vorhanden sind;

dadurch gekennzeichnet, daß die Datenblocklänge m vier Bits beträgt, daß jeder 4-Bit-Block des Satzes in einen Kodeblock der Länge n=6 umgewandelt wird, und daß jeder Block von sechs Bits, bestehend aus einem 4-Bit-Block, der nicht zu dem Satz gehört, zusammen mit den nächsten beiden Bits, in einen 9-Bit-Kode-block umgewandelt wird, dessen sechste bis achte Bits "0" sind.

2. Verfahren zum Kodieren nach Anspruch 1, dadurch gekennzeichnet, daß der vorgegebene Satz von Datenblöcken aus den 4-Bit-Blocks, die mit 01, 10 und 11 beginnen, und dem Block 0000 besteht.

3. Verfahren zum Kodieren binärer Daten nach Anspruch 1 oder 2, dadurch gekennzeichnet, daß beim Umwandeln der 4-Bit-Datenblöcke in 6-Bit-Kodeblocks und auch beim Umwandeln der 6-Bit-Datenblöcke in die 9-Bit-Kodeblocks die Umwandlung eindeutig durchgeführt wird, indem man die jeweilige Kombination von Daten und Kodes verwendet, die in den jeweiligen nachstehenden Umwandlungstabellen S1 bzw. S2 verwendet:

Umwandlungstabelle S1

| 4-Bit-Daten (13 Typen) | 6-Bit-Kodes (13 Typen) |
|---|---|
| 1100 | X00000 |
| 1101 | X00001 |
| 1110 | X00101 |
| 1111 | 010101 |
| 1000 | X01001 |
| 1001 | 010001 |
| 1010 | X00010 |
| 1011 | X01010 |
| 0100 | 010010 |
| 0101 | X00100 |
| 0110 | 010100 |
| 0111 | X01000 |
| 0000 | 010000 |

**0 090 047**

Umwandlungstabelle S2

| 6-Bit-Daten (12 Typen) | 9-Bit-Kodes (13 Typen) |
|---|---|
| 000100 | X00010001 |
| 000101 | X00100001 |
| 000110 | X01000001 |
| 000111 | X01010001 |
| 001000 | 010000001 |
| 001001 | 010010001 |
| 001010 | 010100001 |
| 001011 | X00010000 |
| 001100 | X01010000 |
| 001101 | 010010000 |
| 001110 | X00100000 |
| 001111 | 010100000 |
|  | X01000000 |

wobei "X" das Komplement eines Wertes des Kodebits ist, das dem X-Bit vorausgeht.

4. Verfahren zum Dekodieren binärer Daten zum Dekodieren einer Kodesequenz, die nach dem Kodierverfahren gemäß Anspruch 1, 2 oder 3 umgewandelt worden ist, wobei die Kodesequenz in Intervallen von sechs Bits geteilt wird, und wenn ein sechstes Kodebit in jedem der geteilten 6-Bit-Kodes entweder "1" oder "0" ist und wenn eines der beiden Kodebits, die ihm folgen, nicht "0" ist, werden die 6-Bit-Kodes in vorgegebene 4-Bit-Datenblöcke umgewandelt, aber wenn das sechste Kodebit "0" ist und wenn eines der beiden ihm folgenden Kodebits "0" ist, werden Kodes von neun Bits in ihrer Gesamtheit, wobei ein weiteres Bit hinzuaddiert wird, in vorgegebene 6-Bit-Datenblöcke umgewandelt.

5. Verfahren zum Dekodieren binärer Daten für ein Kodierungssystem nach Anspruch 3, dadurch gekennzeichnet, daß eine Umwandlung, die eine Umkehr der Umwandlungstabelle S1 darstellt, verwendet wird, um die 6-Bit-Kodes in die vorgegebenen 4-Bit-Kodes umzuwandeln, und daß eine Umwandlung, die eine Umkehr der Umwandlungstabelle S2 darstellt, verwendet wird, um die 9-Bit-Kodes in die vorgegebenen 6-Bit-Kodes umzuwandeln.

6. Vorrichtung zum Kodieren binärer Daten zur Durchführung des Verfahrens gemäß Anspruch 1, 2 oder 3, dadurch gekennzeichnet, daß sie folgendes aufweist: ein Schieberegister (3), das die binäre Datensequenz empfängt und mit parallelen Ausgängen versehen ist; eine Musterprüfschaltung (4), welche die Daten von dem Schieberegister (3) erhält und Ausgangssignale ($Q_E$—$Q_H$) liefert, um zu entscheiden, ob die Daten, die dem gerade umzuwandelnden Datenblock um vier Bits vorausgehen, dem Satz entsprechen oder nicht; eine Umwandlungsentscheidungsschaltung (6), die von der Musterprüfschaltung (4) gesteuert ist, um ein Entscheidungssignal (f) mit einem ersten Wert, wenn die Daten dem Satz entsprechen, und mit einem zweiten Wert zu liefern, wenn die Daten dem Satz nicht entsprechen; einen Kodespeicher (5), der die Daten von dem Schieberegister (3) erhält und Ausgangssignale liefert, die 6-Bit-Kodes aus 4-Bit-Datenblöcken oder 9-Bit-Kodes aufweisen, deren sechste bis achte Bits in Abhängigkeit von den 6-Bit-Daten-Blöcken "0" sind, und zwar in Abhängigkeit davon, ob das Entscheidungssignal (f) sich bei seinem ersten oder zweiten Wert befindet; und ein Ausgangsschieberegister, um die kodierten Ausgangssignale des Speichers in serieller Form zu liefern.

7. Vorrichtung zum Dekodieren binärer Daten, um Daten zu dekodieren, die gemäß dem Verfahren nach Anspruch 1, 2 oder 3 kodiert worden sind, dadurch gekennzeichnet, daß es folgendes aufweist: ein Eingangsschieberegister (22); einen Kodespeicher (24), der an parallele Ausgänge des Schieberegisters angeschlossen ist, um 6-Bit-Kodes in 4-Bit-Datenblöcke sowie 9-Bit-Kodes in 6-Bit-Datenblöcke zu dekodieren; einen Umwandlungsabtaster (23), der die Ausgangssignale von dem Schieberegister (22) erhält, ein Muster "000" in den sechsten bis achten Bitpositionen abtastet und Ausgangssignale liefert, die angeben, ob die kodierten Daten 6-Bit-Daten oder 9-Bit-Daten sind; und ein Ausgangsschieberegister (25), das die dekodierten Ausgangssignale von dem Speicher erhält und das von dem Umwandlungsabtaster (23) gesteuert ist, um ein serielles Datenausgangssignal zu liefern.

12

# 0 090 047

**Revendications**

1. Méthode de codage de données binaires où une séquence de données binaires est divisée en blocs prédéterminés; lorsqu'un bloc de données d'une première longueur de m bits est l'un d'un groupe prédéterminé de types de blocs de données, il est converti en un premier bloc prédéterminé de codes de la longueur n qui est plus importante que m; lorsqu'un bloc de données de la première longueur n'est pas l'un dudit groupe, ce bloc de données en même temps que les deux bits de données suivants, suivant ce bloc de données, est converti en un bloc prédéterminé de codes de 3 bits de plus que le premier bloc de codes; et pas moins de un à pas plus de sept bits de code "0" sont forcés à être présents entre deux bits de code successifs "1" dans la séquence de codes convertis; caractérisée en ce que la longueur du bloc de données m est de quatre bits, chaque bloc de quatre bits dudit groupe est converti en un bloc de codes de longueur n=6, chaque bloc de six bits consistant en un bloc de quatre bits n'appartenant pas audit groupe avec les deux bits suivants convertis en un bloc de codes de neuf bits, dont les sixième à huitième bits sont des "0".

2. Méthode de codage selon la revendication 1, caractérisée en ce que ledit groupe prédéterminé de blocs de données consiste en blocs de quatre bits qui commencent par 01, 10 et 11 et le bloc 0000.

3. Méthode de codage de données binaires selon la revendication 1 ou 2, caractérisée en ce que, lors de la conversion des blocs de données à 4 bits en blocs de codes à 6 bits et également lors de la conversion des blocs de données à 6 bits en blocs de codes à 9 bits, la conversion est effectuée sans équivoque en utilisant toute combinaison de données et de codes montrée au tables S1 et S2 de conversion qui suivent, respectivement:

Table de conversion S1

| Données de 4 bits (Treize types) | Codes de 6 bits (Treize types) |
|---|---|
| 1100 | X00000 |
| 1101 | X00001 |
| 1110 | X00101 |
| 1111 | 010101 |
| 1000 | X01001 |
| 1001 | 010001 |
| 1010 | X00010 |
| 1011 | X01010 |
| 0100 | 010010 |
| 0101 | X00100 |
| 0110 | 010100 |
| 0111 | X01000 |
| 0000 | 010000 |

# 0 090 047

Table de conversion S2

| Données de 6 bits (Douze types) | Codes de 9 bits (Treize types) |
|---|---|
| 000100 | X00010001 |
| 000101 | X00100001 |
| 000110 | X01000001 |
| 000111 | X01010001 |
| 001000 | 010000001 |
| 001001 | 010010001 |
| 001010 | 010100001 |
| 001011 | X00010000 |
| 001100 | X01010000 |
| 001101 | 010010000 |
| 001110 | X00100000 |
| 001111 | 010100000 |
|  | X01000000 |

où "X" est le complément d'une valeur du bit de code précédant le bit X.

4. Méthode de décodage de données binaires pour décoder une séquence de codes convertis selon la méthode de codage selon la revendication 1, 2 ou 3, la séquence de codes étant divisée à des intervalles de 6 bits, et lorsqu'un sixième bit de code dans chacun des codes divisés à 6 bits est soit "1" ou "0", et lorsque l'un des deux bits de code le suivant n'est pas "0", lesdits codes de 6 bits sont convertis en bloc de données prédéterminé de 4 bits, mais lorsque ledit sixième bit de code est "0" et lorsque l'un desdits deux bits de code le suivant est "0", des codes de neuf bits dans leur totalité ayant un bit qui leur est ajouté sont convertis en blocs prédéterminés de données de 6 bits.

5. Méthode de décodage de données binaires pour un système de codage selon la revendication 3, caractérisée en ce qu'une conversion inverse de la table de conversion S1 est utilisée pour convertir les codes de 6 bits en codes prédéterminés de 4 bits et une conversion inverse de la table de conversion S2 est utilisée pour convertir les codes de 9 bits en codes prédéterminés de 6 bits.

6. Appareil de codage de données binaires pour la mise en oeuvre de la méthode selon la revendication 1, 2 ou 3, caractérisé en ce qu'il comprend un registre à décalage (3) pour recevoir la séquence de données binaires et pourvu de sorties en parallèle; un circuit de vérification de configuration (4) recevant les données des dernières sorties ($Q_E$—$Q_H$) du registre à décalage (3) pour décider si la donnée précédant de 4 bits le bloc de données sur le point d'être converti correspond audit groupe ou pas; un circuit de décision de conversion (6) commandé par le circuit de vérification de configuration (4) pour produire un signal de décision (f) à une première valeur lorsque lesdites données correspondent audit groupe et à une seconde valeur lorsque les données ne correspondent pas audit groupe; une mémoire de codes (5) qui reçoit les données du registre à décalage (3) et produit des sorties comprenant des codes de 6 bits de blocs de données de 4 bits ou des codes de 9 bits dont les sixième à huitième bits sont "0" en réponse aux blocs de données de 6 bits selon que le signal de décision (f) est à sa première ou seconde valeur respectivement; et un registre à décalage de sortie pour produire les sorties codées de la mémoire, en série.

7. Appareil de décodage de données binaires pour décoder des données codées selon les méthodes des revendications 1, 2 ou 3, caractérisé en ce qu'il comprend un registre à décalage d'entrée (22); une mémoire de codes (24) connectée aux sorties en parallèle du registre à décalage pour décoder les codes de 6 bits en blocs de données de 4 bits et pour décoder les codes de 9 bits en blocs de données de 6 bits; un capteur de conversion (23) qui reçoit les sorties du registre à décalage (22) qui détecte une configuration 000, dans les sixième à huitième positions de bit et qui produit des signaux de sortie indiquant si les données codées sont de 6 bits ou de 9 bits; et un registre à décalage de sortie (25) recevant les sorties décodées de la mémoire et commandé par le capteur de conversion (23) pour produire des données de sortie en série.

14

FIG. 1

(a) ORIG BIN DATA SEQ    |← To →|

     I   0   I   I   0   0   I

(b) FM SYST    I I I 0 I I I I I 0 I 0 I I

(c) NRZI SIG OF FM SYST

(d) MFM SYST    0 I 0 0 0 I 0 I 0 0 I 0 0 I

(e) NRZI SIG OF MFM SYST

FIG. 3

(a) CK1

(b)   I 0 0 0 0 0 I 0 I I

(c) CK2

(d)

(e)

(f)

(g) CK3

(h)   I 0 I 0 0 I I 0 0 0 I 0 0 0 0

(i)

0 090 047

# FIG. 2

# FIG. 4

# FIG. 5